# EUROPÄISCHE PATENTSCHRIFT

(11) **EP 2 127 402 B1**
(45) Veröffentlichungstag und Bekanntmachung des Hinweises auf die Patenterteilung: **28.07.2010**
(21) Anmeldenummer: 08708965.2
(22) Anmeldetag: 13.02.2008
(51) Int. Cl.: H04Q 3/00

(54) **VERFAHREN UND KOMMUNIKATIONSEINRICHTUNG ZUM VERARBEITEN EINES WÄHLVORGANGS**
METHOD AND COMMUNICATION DEVICE FOR PERFORMING A DIALING PROCESS
PROCÉDÉ ET DISPOSITIF DE COMMUNICATION PERMETTANT DE TRAITER UNE OPÉRATION DE NUMÉROTATION

(30) Priorität: 20.02.2007 DE 102007008245
(43) Veröffentlichungstag der Anmeldung: 02.12.2009
(73) Patentinhaber: Gigaset Communications GmbH, 81379 München (DE)
(72) Erfinder: TÖBBEN, Wilfried, 49624 Löningen (DE); WIENAND, Jörg, 46399 Bocholt (DE)
(74) Vertreter: Schulz, Dirk
(86) Internationale Anmeldenummer: PCT/EP2008/051754
(87) Internationale Veröffentlichungsnummer: WO 2008/101849

(56) Entgegenhaltungen:
- CAMARILLO G ET AL: "Mapping of Integrated Services Digital Network (ISDN) User Part (ISUP) Overlap Signalling to the Session Initiation Protocol (SIP)" IETF RFC3575, August 2003 (2003-08), XP015009360
- "Signalling System No. 7 - ISDN User Part signalling procedures" ITU-T RECOMMENDATION Q.764, Dezember 1999 (1999-12), XP017403093

## Beschreibung

Bei einem Verbindungsaufbau von Telefonanrufen haben sich verschiedene Vorgehensweisen herausgebildet, wie und zu welchem Zeitpunkt Ziffern einer Rufnummer auswertet werden. Bei einem analogen Telefon wird üblicherweise jede gewählte Ziffer vom Telefon nach ihrer Eingabe ohne Verzögerung an die zuständige Vermittlungsstelle übermittelt. Die Vermittlungsstelle wertet bei analoger Vermittlungstechnik üblicherweise jede eintreffende Ziffer umgehend aus und baut, sobald die Auswertung dies ergibt, eine Verbindung zu einer entfernten Vermittlungsstelle auf. Beispielsweise bei Eingabe einer Rufnummer "03022730431", wobei die Ziffern nacheinander an die Vermittlungsstelle übertragen werden, ergibt die Auswertung der ersten Ziffer, dass es sich um ein Ferngespräch handelt, und nach Auswertung der folgenden zwei Ziffern "30" kann die Vermittlungsstelle bereits eine Leitung zu einer Vermittlungsstelle in Berlin aufbauen. Die weiteren Ziffern "22730431" werden nacheinander der Berliner Vermittlungsstelle übergeben, wobei diese Vermittlungsstelle nun sukzessive die verbleibenden Ziffern auswertet und die Verbindung bis zur zugehörigen Amtsleitung - in diesem Beispiel eine Leitung des Deutschen Bundestags - durchschaltet. Das genannte Verfahren, bei dem jede anfallende Ziffer sofort ausgewertet wird, wird üblicherweise als schritthaltende Wahl bezeichnet und zeichnet sich dadurch aus, dass die Verbindung Schritt für Schritt aus verschiedenen Verbindungsabschnitten aufgebaut wird.

Bei Einsatz von Digitaltechnik in den Vermittlungsstellen können die an einem Telefon eingegebenen Ziffern weiterhin einzeln an eine zugehörige Vermittlungsstelle übermittelt werden, doch diese besitzt üblicherweise die Möglichkeit, die eingehenden Ziffern zu sammeln und anschließend gemeinsam auszuwerten. Bei einem derartigen Sammeln von Wählziffern ergibt sich nun für die Vermittlungsstelle die Schwierigkeit, das tatsächliche Ende der Wählzifferneingabe zu erkennen, weil erst nach vollständig erhaltener Zielrufnummer die Auswertung der Zielrufnummer erfolgen kann.

Bei digitalen Telefonen bietet sich üblicherweise neben der Möglichkeit, erst den Telefonhörer abzuheben und nach Aufbau einer Verbindung zur nächstliegenden Verbindungsstelle - erkennbar durch die Ausgabe eines Freizeichens - die Wählziffern einzugeben, zusätzlich die Möglichkeit, erst alle benötigten Wählziffern einzugeben und anschließend den Hörer abzuheben. Diese Vorgehensweise wird üblicherweise als "Blockwahl" oder als "Wahl bei aufgelegtem Hörer" bezeichnet, und bewirkt, dass je nach Protokoll alle Wählziffern in schneller Abfolge hintereinander oder in einer gemeinsamen Meldung an die zugehörige Vermittlungsstelle übermittelt werden. Eine derartige Blockwahl erfolgt neben der genannten Wahl bei aufgelegtem Hörer, auch bei Auswahl einer Rufnummer aus einem elektronischen Telefonbuch oder einer Anruferliste, oder bei Anwendung einer Wahlwiederholungsfunktion.

Bei Blockwahl und bei Übermittlung der Wählziffern in einer gemeinsamen Meldung ist gesichert, dass der Vermittlungsstelle alle benötigten Wählziffern für eine Verarbeitung in der Vermittlungsstelle zur Verfügung stehen. Bei Blockwahl und bei Übermittlung der Wählziffern in schneller Abfolge hintereinander, ergibt sich dagegen das bereits vorstehend genannte Problem, das tatsächliche Ende der Wählzifferneingabe zu erkennen.

Basieren die Vermittlungsstellen auf Voice-Over-IP-Technologie, so wird gemäß Protokollvorgaben und gemäß des gegenüber Leitungsvermittlung deutlich unterschiedlichen Routing-Verfahrens erwartet, dass die vollständige Wählziffernfolge gemeinsam in einem Datenpaket bei einer Vermittlungsstelle oder einer einer Vermittlungsstelle funktionell entsprechenden Vermittlungseinrichtung eintreffen. Während nun spezifische Voice-Over-IP-Endgeräte auf diese Rahmenvorgaben vorbereitet sind, ergibt sich insbesondere bei Ankopplung von traditionellen analogen oder digitalen Telefonen über einen entsprechenden Gateway die Problematik, dass bei dem Gateway die Wählziffern eventuell einzeln eintreffen, doch dieser Gateway die Wählziffern nur protokollkonform gemeinsam in einem dafür vorgesehenen Feld eines Datenpakets weiterleiten kann. Somit ergibt sich für den Gateway die Aufgabe, die Wahlziffern zwischenzuspeichern und zu sammeln und nach vollständigem Eingang der Wählziffernfolge in einem gemeinsamen Datenpaket weiterzuleiten.

Gelöst wird dies üblicherweise durch Abwarten eines Ablauf eines Zeitgebers nach Eingabe einer jeweiligen Ziffer, wobei die Zeitdauer bis zum Ablauf des Zeitgebers auch für langsame Zifferneingabe ausreichend dimensioniert sein muss, da ein zu früh ausgelöster Durchschaltversuch zu Fehlverbindungen oder zum Abweisen des Verbindungsgesuchs führt, was wiederum zu eingeschränkter Akzeptanz oder zu Frustrationen bei die Zifferneingabe durchführenden Bedienern eines Telefons führen kann. Durch den Einsatz dieses auch für langsame Bedienung ausreichend dimensionierten Zeitgebers kann es zu deutlichen Verzögerungen im Rufaufbau von über Voice-Over-IP-Strecken vermittelten Verbindungen führen.

Aus dem Dokument IETF RFC3578 (CAMARILLO G ET AL: "Mapping of Integrated Services Digital Network (ISDN) User Part (ISUP) Overlap Signalling to the Session Initiation Protocol (SIP)") ist schon ein solches Verfahren zum Verarbeitung eines Wählvorgangs bekannt.

Es ist Aufgabe der Erfindung eine möglichst schnelle Verarbeitung von eingegeben Wählziffern für einen weitgehend verzögerungsfreien Verbindungsaufbau zu ermöglichen.

Gelöst wird diese Aufgabe durch ein Verfahren zum Verarbeiten eines Wählvorgangs gemäß Patentanspruch 1, sowie eine Kommunikationseinrichtung gemäß Patentanspruch 11.

Vorteilhafte Ausführungsformen und Weiterbildungen der Erfindung sind in den abhängigen Ansprüchen angegeben.

In dem erfindungsgemäßen Verfahren zum Verarbeiten eines Wählvorgangs in einer Kommunikationseinrichtung, bei der es sich insbesondere um eine Kommunikationsendeinrichtung wie einem Telefon, einer Vermittlungseinrichtung oder einer Umsetzeinrichtung handelt, wird der Kommunikationseinrichtung eine aus mindestens zwei Kenntönen bestehende, zu verarbeitende Kenntonfolge sequentiell zugeführt. Kenntöne dieser zu verarbeitenden Kenntonfolge werden erkannt oder detektiert. Die Kenntonfolge umfasst insbesondere eine Repräsentation einer Zielrufnummer oder einer Wählinformation. Allgemein betrachtet, umfasst die Kenntonfolge eine als Einheit oder zusammengehöriger Block zu betrachtende Folge von Kenntönen, die vorzugsweise auch gemeinsam als Einheit bzw. Block weiterverarbeitet werden. Gemäß des erfindungsgemäßen Verfahrens wird eine zwischen einem ersten Kennton der Kenntonfolge und einem nächstfolgenden zweiten Kennton der Kenntonfolge auftretende erste Dauer eines kenntonfreien Zeitabschnitts erfasst, wobei für einen und insbesondere auch jeden folgenden Kennton der Kenntonfolge ein Übersteigen bzw. Überschreiten der ersten Dauer durch einen sich dem jeweiligen folgenden Kennton jeweils anschließenden kenntonfreien Zeitabschnitt geprüft wird.

Unter Kennton versteht man insbesondere für eine Übertragung von Sprach- und/oder Datenkommunikation - insbesondere im Rahmen einer Signalisierung - vorgesehene Signale, die einer vordefinierten Spezifikation genügen. Dies sind beispielsweise DTMF-kodierte Signale, insbesondere Wählziffern (DTMF: Dual Tone Multi Frequency) oder Fax-Töne, Wählimpulse oder jegliche andere Art von kodierten Signalen.

Eine Kenntonfolge ist im Rahmen der Erfindung als zeitliche Abfolge von Kenntönen zu verstehen, wobei jeder Kennton für eine vorzugsweise vordefinierte Zeitdauer anliegt und zwischen zwei Kenntönen kenntonlose bzw. tonlose Zeitabschnitte oder Pausen auftreten können bzw. vorgesehen sein können, durch die die Kenntöne getrennt werden. Unmittelbar aufeinander folgende Kenntöne können hierbei so interpretiert werden, dass die Kenntöne von einer Pause mit einer Pausendauer von Null getrennt sind. Je nach verwendetem Protokoll kann aber auch eine nicht zu unterschreitende Pause vorgesehen sein, um die Kenntöne bei einem Empfänger besser unterscheiden zu können.

Unter dem sequentiellen Zuführen von Kenntönen ist insbesondere ein über eine Eingangsleitung eingehende Abfolge von zeitlich nacheinander auftretenden Kenntönen zu verstehen, wobei zumindest in einer denkbaren Ausgestaltung keinerlei Überlappen oder gleichzeitiges Anliegen von Kenntönen auftritt. Alternative Ausgestaltungen mit Überlappungen von Kenntönen im Zeitverlauf sind jedoch denkbar.

Ein Übersteigen bzw. Überschreiten einer Dauer als zu vergleichender Referenz-Zeitabschnitt durch eine weitere Dauer ist gegeben, wenn die weitere Dauer zeitlich einen größeren Umfang hat bzw. eine umfangreichere Zeitspanne aufweist als die Dauer des zu vergleichenden Referenz-Zeitabschnitts. Bei den Zeitabschnitten und den Zeitdauern handelt es sich um relative Zeitinförmationen zwischen einem jeweiligen Anfangszeitpunkt und einem zugehörigen Endzeitpunkt eines auftretenden Ereignisses, wobei ein Übersteigen einer Zeitspanne auch erkannt werden kann, wenn ein den Endzeitpunkt repräsentierendes Ereignis - zumindest im betrachteten Zeitintervall - ausbleibt. Als ein Ereignis kann in diesem Zusammenhang insbesondere das Einsetzen eines Kenntons oder das Ende eines Kenntons gesehen werden.

Vorteilhafterweise kann das Verfahren eingesetzt werden, um ein Ende oder einen Abschluss einer von einer weiteren Kommunikationseinrichtung - insbesondere einer Endeinrichtung wie ein Telefon oder ein Faxgerät - generierten Kenntonfolge, beispielsweise im Rahmen einer Wahl einer Zielrufnummer, zu erkennen. Hierbei kann ausgenützt werden, dass einem Faxgerät und einem Telefon beispielsweise bei Auswahl einer Rufnummer aus einem elektronischen Telefonbuch, die kompletten Ziffern der Rufnummer zur Verfügung stehen und somit die Anwahl einer Vermittlungsstelle mittels Blockwahl erfolgen kann. Bei einer derartigen Blockwahl werden Kenntöne einer Kenntonfolge häufig in einer im Wesentlichen äquidistanten, zeitlich gleichförmigen Abfolge gesendet, so dass durch Erkennen eines sich von vorhergehend eintreffenden Kenntönen bzgl. des zeitlichen Abstands zum unmittelbar vorhergehenden Kennton veränderten kenntonlosen Zeitabschnitts das Ende der Kenntonfolge bestimmt werden kann oder auf diese Weise der veränderte kenntonlose Zeitabschnitt zumindest als ein Indiz für das Ende der Kenntonfolge gewertet werden kann.

In einer vorteilhaften Ausführungsform des erfindungsgemäßen Verfahrens kann für jeden auf den zweiten Kennton folgenden Kennton der Kenntonfolge das Überprüfen auf Übersteigen der ersten Dauer durch den dem jeweiligen folgenden Kennton jeweils anschließenden kenntonfreien Zeitabschnitt erfolgen. Somit kann ein Ende der Kenntonfolge durch Detektion des erstmaligen Übersteigens der ersten Dauer durch den jeweils anschließenden kenntonfreien Zeitabschnitt erkannt werden.

Vorteilhafterweise kann somit für mit Blockwahl abgesetzte Kenntöne auf ein Ablaufen eines Zeitgebers mit langer Laufzeit verzichtet werden, der ansonsten - insbesondere bei manueller Eingabe von kennton-auslösenden Aktionen wie der Eingabe von Wählziffern - für ein Erkennen des Endes einer abgeschlossenen Kenntonfolge vorgesehen ist. Insbesondere kann sich durch Einsatz der Erfindung erreichen lassen, dass die Dauer des kenntonfreien Zeitabschnitts um ein mehrfaches geringer ist als eine Ablaufdauer eines üblicherweise vorgesehenen Zeitgebers zum Erkennen des Endes der zu verarbeitenden Kenntonfolge bei manueller Eingabe von Kenntönen.

In einer weiteren vorteilhaften Ausgestaltung der Erfindung kann eine Verarbeitung der Kenntonfolge unmittelbar nach dem Übersteigen der ersten Dauer durch den kenntonfreien Zeitabschnitt erfolgen. Somit wird beispielsweise bei der Auswertung von Wählziffern im Rahmen eines Verbindungssaufbaus ermöglicht, dass ein Verbindungsaufbau deutlich schneller vollzogen wird als bei üblichem Abwarten eines lang laufenden Zeitgebers. Für einen Anrufer wird dies durch ein wesentlich verzögerungsfreieres Einspielen eines Freitons an einem verwendeten Telefonhörer deutlich. Dies ist insbesondere wichtig, da bekannt ist, dass Benutzer, die Benutzeraktionen an einem technischen Gerät durchführen, nach einer gewissen Zeitspanne eine Rückkopplung durch das bediente Gerät zu den getätigten Aktionen erwarten und ansonsten von einem Fehlverhalten des Geräts ausgehen.

In einer weiteren vorteilhaften Ausgestaltung kann bereits bei Überschreiten der dem ersten Kennton folgenden Zeitdauer über einen - eventuell durch einen Kommunikationsstandard - vorgegebenen Grenz-Zeitdauerwert erkannt werden, dass es sich bei der Kenntonfolge nicht um eine Blockwahl handelt. Somit kann bereits zu Beginn der Kenntonfolge nach lediglich einem Kennton bestimmt werden, ob die weiteren Schritte des erfindungsgemäßen Verfahrens überhaupt durchgeführt werden sollen bzw. müssen. Diese Vorgehensweise macht sich dabei zu Nutze, dass ein bestimmter Grenzwert als maximal erlaubte Zeitdauer zwischen zwei Tönen gemäß einer vorgegebenen Richtlinie oder gemäß einer Implementierung nicht überschritten werden darf.

In einer vorteilhaften Weiterbildung des erfindungsgemäßen Verfahrens kann das Erkennen des Übersteigens der ersten Dauer durch den kenntonfreien Zeitabschnitt mittels Verwendung eines Zeitgebers realisiert werden. Insbesondere kann ein die erfasste erste Dauer repräsentierender Zeitdauer-Wert als Laufzeit eines Zeitgebers verwendet werden. Der Zeitgeber kann mit gesetzter Laufzeit gemäß dem Zeitdauer-Wert jeweils unmittelbar nach Ende eines der folgenden Kenntöne gestartet werden, so dass das Übersteigen der ersten Dauer durch den kenntonfreien Zeitabschnitt dadurch erkannt werden kann, dass ein Ablaufen des Zeitgebers nicht mit einem Eintreffen eines dem zweiten Kennton nächstfolgenden weiteren Kenntons übereinstimmt. Hierbei ist eine derartige zeitliche Übereinstimmung vorzugsweise im Rahmen von zeitlichen Schranken bzw. Schwellwerten auszuwerten, so dass minimale und üblicherweise auftretende Schwankungen unberücksichtigt bleiben. Die Übereinstimmung ist somit lediglich im Wesentlichen gegeben, da ein exaktes Übereinstimmen des Ablaufens des Zeitgebers mit dem Eintreffen des dem zweiten Kennton nächstfolgenden weiteren Kenntons in einer realen Implementierung üblicherweise nicht zu erwarten ist.

Ein Beginn einer Kenntonfolge kann beispielsweise durch ein erstmaliges Eintreffen eines Kenntons erkannt werden. Alternativ kann in einer dazu alternativen Weiterbildung der Erfindung der Beginn einer zusammengehörigen Kenntonfolge unter zusätzlicher Ermittlung einer zweiten Dauer eines kenntonfreien Zeitabschnitts zwischen dem zweiten Kennton und einem nächstfolgenden dritten Kennton der Kenntonfolge erfolgen, indem ein die erste Dauer repräsentierender erster Zeitdauer-Wert mit einem die zweite Dauer repräsentierenden zweiten Zeitdauer-Wert verglichen wird, wobei bei Übereinstimmung der ersten und der zweiten Zeitdauer-Werte der erste Kennton als Beginn der zu verarbeitenden Kenntonfolge erkannt wird.

In einer weiteren vorteilhaften Weiterbildung der Erfindung kann für jeden der folgenden Kenntöne der Kenntonfolge zu dessen jeweils unmittelbar vorhergehenden Kennton ein weiterer Zeitdauer-Wert erfasst werden, der eine jeweilig weitere Dauer eines kenntonfreien Zeitabschnitts repräsentiert. Weiterhin kann für jeden der folgenden Kenntöne der Kenntonfolge ein die erste Dauer repräsentierender erster Zeitdauer-Wert mit dem jeweiligen weiteren Zeitdauer-Wert verglichen werden, so dass aufgrund einer erstmaligen Ungleichheit - also Überschreiten oder Unterschreiten - der der weiteren Dauer unmittelbar vorausgehende Kennton, d.h. also genau der vorstehend als folgender Kennton bezeichnete Kennton, als Ende der Kenntonfolge erkannt wird. Auf diese Weise kann beispielsweise eine manuelle Nachwahl von nicht zu einer Zielrufnummer gehörenden Ziffern implementiert werden, so dass lediglich die in äquidistanter Folge eintreffenden Kenntöne der Zielrufnummer zugehörig erkannt werden, und zeitlich ungleichmäßig, nachfolgende Kenntöne als nachgewählte Ziffern erkannt werden. Eine derartige Vorgehensweise kann beispielsweise für eine Fernabfrage eines Anrufbeantworters verwendet werden, in dem nachfolgende Ziffern nicht für den Verbindungsaufbau verwendet werden, sondern zum Ansprechen von Funktionen des Anrufbeantworters.

In einer dazu alternativen vorteilhaften Ausgestaltung der Erfindung, können nach vermeintlichem Erkennen des Endes der zu verarbeitenden Kenntonfolge zu verarbeitende nachfolgende und anstehende Kenntöne als der Kenntonfolge zugehörig bestimmt werden, sofern ein jeweiliges Übersteigen einer vorgegebenen Zeitdauerobergrenze durch einen Zeitdauer-Wert eines dem jeweiligen nachfolgenden Kennton jeweils anschließenden kenntonfreien Zeitabschnitts unterbleibt. Vorteilhafterweise lässt sich somit eine manuelle Nachwahl für eine Zielrufnummerneingabe implementieren, bei der ein Benutzer die ersten Ziffern einer Rufnummer automatisch generieren lässt und anzuhängende weitere Ziffern manuell eingibt, wobei alle Ziffern für eine Verbindungsinitiierung gemeinsam ausgewertet werden. Dies ist besonders vorteilhaft in Firmennetzen, bei denen für eine Durchwahl von einem Firmenstandort zu einem weiteren Standort häufig eine Kennzahl verwendet wird - die dann systemseitig durch die Vorwahl und der weiteren Wählnummern bis zur Vermittlung der Firma ersetzt werden -, und die eigentlich zu kontaktierende Nebenstelle dann durch manuelle Eingabe der noch fehlenden Ziffern vom Benutzer erfolgt, wobei vermittlungsseitig alle Ziffern als der Zielrufnummer zugehörig bestimmt werden.

Während das vorgestellte Verfahren und die genannten Ausführungsformen für jegliche Art von Transportnetzwerken oder Vermittlungsprotokollen sinnvoll einsetzbar ist, kann sich eine Umsetzung der Erfindung in Netzwerken, in denen zumindest eine Teilstrecke als paketorientiertes Netzwerk ausgestaltet ist, besonders vorteilhaft erweisen, da in Protokollen derartiger Netzwerke häufig davon ausgegangen wird, dass eine Rufnummer komplett vorhanden ist, da nur mit einer vollständig erfassten Rufnummer ein Abfragen von Zieladressen - insbesondere IP-Adressen (IP: Internet Protocol) - im paketorientierten Netzwerk möglich ist. Eine kodierte Übermittlung der Kenntonfolge für eine Verbindungsinitiierung im paketorientierten Netzwerk kann hierbei vorzugsweise in einem dafür vorgesehenen Feld eines Datenpaketes - insbesondere ein Adressfeld zum Angeben einer Zieladresse, beispielsweise gemäß E.164-Darstellung - eines paketorientierten Netzwerkes erfolgen.

Eine das erfindungsgemäße Verfahren ausführende Kommunikationseinrichtung zum Verarbeiten eines Wählvorgangs weist insbesondere eine Erfassungseinheit und eine Überprüfungseinheit auf. Die Erfassungseinheit ist zum Erfassen einer zwischen einem ersten Kennton und einem nächstfolgenden zweiten Kennton, einer aus mindestens zwei Kenntönen bestehenden, der Kommunikationseinrichtung sequentiell zugeführten, zu verarbeitenden Kenntonfolge, auftretenden ersten Dauer eines kenntonfreien Zeitabschnitts, vorgesehen. Die Überprüfungseinheit wiederum umfasst Mittel zum Überprüfen eines Übersteigens der ersten Dauer durch einen für einen folgenden Kennton der Kenntonfolge jeweils anschließenden kenntonfreien Zeitabschnitt.

Ein Ausführungsbeispiel der Erfindung wird nachfolgend anhand der Zeichnung näher erklärt.

Dabei zeigen jeweils in schematischer Darstellung die
- Figur 1: eine Blockgrafik eines Kommunikationssys- tem, das Komponenten zur Ausführung des erfindungsgemäßen Verfahrens umfasst,
- Figur 2: Diagramme zur Verdeutlichung von verschie- denen zeitlichen Abfolgen von bei Block- wahl eingehenden Kenntönen,
- Figur 3: Diagramme zur Verdeutlichung von verschie- denen zeitlichen Abfolgen von bei manuel- ler Wahl eingehenden Kenntönen,
- Figur 4: eine Blockgrafik einer das erfindungsgemä- ße Verfahren ausführende Umsetzeinrich- tung.

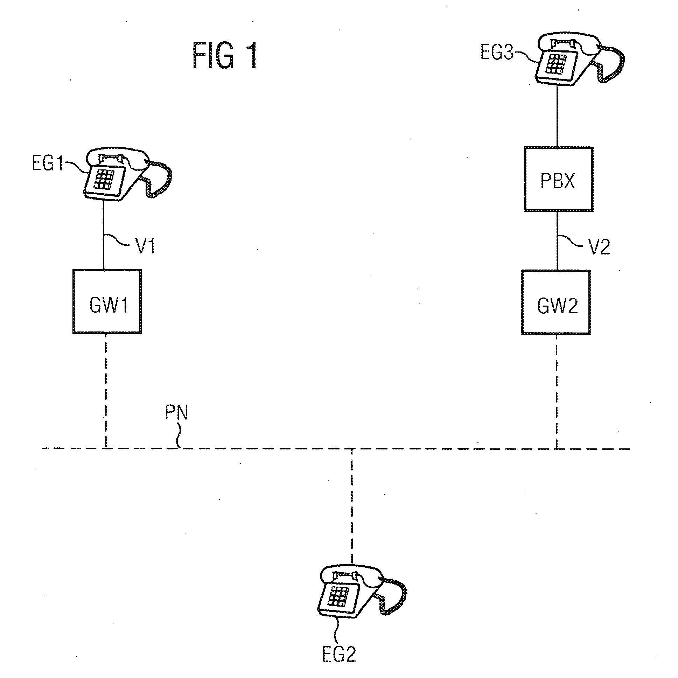

In Figur 1 sind in einer schematischen Darstellung Komponenten eines Kommunikationssystems dargestellt. Das Kommunikationssystem umfasst ein gestrichelt dargestelltes paketorientiertes Netzwerk PN zur Übertragung von Datenpaketen und insbesondere von Sprachdatenpaketen, die beispielsweise mittels RTP-kodierten (RTP: Real-Time Transport Protocol) IP-Paketen übertragen werden. Als zugrunde liegendes Protokoll für die Übertragung über das paketorientierte Netzwerk PN kann beispielsweise ein Protokoll gemäß der ITU-T-Empfehlung H.323 (ITU-T: Telecommunication Standardization Sector der International Telecommunication Union) oder gemäß dem durch die IETF (Internet Engineering Task Force) definierten SIP-Vorschlag (SIP: Session Initiation Protocol) vorgesehen sein.

An das paketorientierte Netzwerk PN können beliebige IPbasierte Einrichtungen angeschlossen sein, wobei in Figur 1 lediglich ein IP-Telefon EG2 und ein erster und ein zweiter Gateway GW1 und GW2 dargestellt sind. Die beiden Gateways GW1 und GW2 stellen Übergangseinrichtungen zwischen IP-basiertem Netzwerk - dem paketorientierten Netzwerk PN - und leitungsvermittelten Netzwerken dar. Während beliebige leitungsvermittelte Netzwerke und für diese beliebige Topologien denkbar sind, ist in Figur 1 lediglich jeweils eine direkte Leitung für ein derartiges leitungsvermitteltes Netzwerk angegeben.

Somit ist an dem ersten Gateway GW1 eine erste analoge Verbindungsleitung V1 als leitungsvermitteltes Netzwerk dargestellt. Als weiteres leitungsvermitteltes Netzwerk ist eine zweite analoge Verbindungsleitung V2 sowie eine analoge Vermittlungsanlage PBX angegeben, wobei die zweite analoge Verbindungsleitung V2 eine Kopplung der Vermittlungsanlage PBX zum zweiten Gateway GW2 bereitstellt. Dargestellt sind die erste und die zweite analoge Verbindungsleitung V1 und V2 als durchgezogene Linie. Beide seien im vorliegenden Ausführungsbeispiel zur Übertragung von analogen Impulsen und Tönen ausgestaltet, so dass über die beiden analogen Verbindungsleitungen V1 und V2 mittels Impulswahl oder Tonwahl eingegebene Ziffern gemäß einer Kodierung für analoge Übertragung - beispielsweise gemäß PCM (Puls-Code-Modulation) - übertragen werden. Über diese beiden analogen Verbindungsleitungen V1 und V2 werden insbesondere kodierte Sprache und als Töne oder Impulse repräsentierte Ziffern übermittelt, wobei derartige, beispielsweise eine Zahl einer Rufnummer repräsentierende Töne, im Rahmen dies Dokuments als Kenntöne bezeichnet werden.

Figur 1 umfasst weiterhin ein erstes analoges Telefon EG1, das über die erste analoge Verbindungsleitung V1 an den ersten Gateway GW1 angekoppelt ist, sowie ein zweites analoges Telefon EG3, das über die Vermittlungsstelle PBX und der zweiten analogen Verbindungsleitung V2 mit dem zweiten Gateway GW2 verbunden ist.

Anhand dieses Kommunikationssystems und der darin angeordneten Komponenten wird im Folgenden eine Ausgestaltung des erfindungsgemäßen Verfahrens erläutert. Dabei wird davon ausgegangen, dass sich das erste analoge Telefon EG1, das zweite analoge Telefon EG3, sowie das IP-Telefon EG2 jeweils in einem Ruhezustand befinden. Weiterhin wird davon ausgegangen, dass das erste analoge Telefon EG1 einen Rufaufbau initiiert und somit im Wortlaut der Ansprüche eine analoge, die Kenntonfolge übermittelnde Kenntonquelle darstellt. Das erfindungsgemäße Verfahren wird wiederum im Rahmen des Ausführungsbeispiels durch den Gateway GW1 umgesetzt, so dass der Gateway GW1 die erfindungsgemäße Kommunikationseinrichtung darstellt.

Als initialer Schritt wird am ersten analogen Telefon EG1 ein Verbindungsaufbau initiiert. Hierbei sind insbesondere folgende Abläufe denkbar:
Variante 1: Ein Benutzer hebt den Hörer ab und wählt an der Tastatur eine Zielrufnummer.
Variante 2: Ein Benutzer wählt an der Tastatur eine Zielrufnummer und hebt dann den Hörer ab.
Variante 3: Ein Benutzer wählt aus einem elektronischem Telefonbuch, einer Anruferliste oder einem anderen Nummernspeicher einen Eintrag aus und hebt vorher oder nachher den Hörer ab.
Variante 4: Ein Benutzer löst einen Rückruf oder betätigt die Wahlwiederholung, wobei er erneut vorher oder nachher den Hörer abhebt.

Alternativ zum Abheben des Hörers bietet sich auch häufig die Möglichkeit eine Verbindung mittels eines weiteren Tastendrucks auszulösen, insbesondere wenn eine Freisprechen-Funktionalität zur Verfügung steht.

In Variante 1 wird nach Abheben des Hörers eine Verbindung zumindest zum ersten Gateway GW1 aufgebaut. Anschließend generiert das erste analoge Telefon EG1 für jeden Tastendruck auf der Wahltastatur einen Kennton und übermittelt diesen Kennton an den ersten Gateway GW1. Sukzessive gibt nun der Benutzer weitere Wählziffern ein, so dass ähnlich seiner Eingabegeschwindigkeit die jeweils generierten Kenntöne als zu verarbeitende Kenntonfolge an den ersten Gateway GW1 übermittelt werden, wobei das Zeitverhalten und insbesondere die Pausen zwischen den Kenntönen individuell vom Benutzer entsprechend des Ablaufs der Eingabe an der Wähltastatur vorgegeben wird.

Demgegenüber werden bei den übrigen Varianten 2 bis 4 üblicherweise die Kenntönen der Wählziffern in einem Block ausgesendet, da alle zu wählenden Ziffern bekannt sind, wobei eine Ablaufsteuerung des ersten analogen Telefons EG1 das Zeitverhalten der den Wählziffern zugeordneten auszusendenden Kenntöne bestimmt. Hierbei wird im Rahmen des Ausführungsbeispiels davon ausgegangen, dass durch diese Ablaufsteuerung des ersten analogen Telefons EG1 ein Aussenden der Kenntöne als Kenntonfolge zeitlich gleichmäßig ausführt wird, so dass Pausen zwischen den einzelnen Kenntönen weitgehend identisch sind und lediglich bauartbedingte zeitliche Schwankungen auftreten.

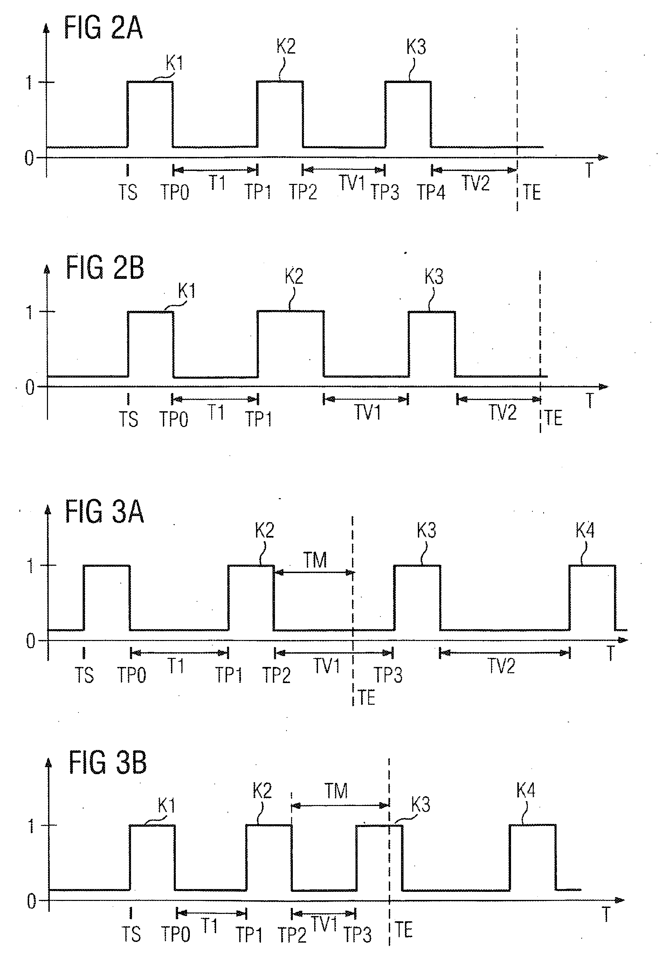

Dem ersten Gateway GW1 ist nicht bekannt, welche der Varianten für das Wählen einer Zielrufnummer ausgeführt worden ist. Er erhält lediglich die aus mehreren Kenntönen bestehende zu verarbeitende Kenntonfolge, und muss nun anhand der Kenntonfolge bestimmen, welches der letzte zur gewählten Zielrufnummer gehörende Kennton ist, um daraufhin die Erzeugung eines entsprechenden Datenpakets - insbesondere ein Signalisierungspaket im Rahmen einer Verbindungsinitiierung - zu generieren und in das paketorientierte Netzwerk PN abzusetzen. Für eine derartige, beim ersten Gateway GW1 eingehende und vom ersten analogen Telefon EG1 ausgelöste Kenntonfolge, werden nun an Hand der Figuren 2 und 3 die Verfahrensschritte der Erfindung erläutert.

In den Abbildungen der Figuren 2 und 3 ist jeweils der Zeitverlauf von beim ersten Gateway GW1 eingehenden Kenntönen an einer horizontalen Zeitachse T' angetragen. In der Vertikalen ist angetragen, ob ein Kennton am analogen Eingang des Gateways GW1 anliegt - angedeutet durch den vertikalen Wert "1" - oder ob zu einem Zeitpunkt kein Kennton anliegt - Wert "0".

In den Abbildungen der Figuren 2 ist eine eingehende Kenntonfolge bei Blockwahl zu erkennen, also gemäß den vorstehend genannten Varianten 2 bis 4, bei denen die Kenntöne durch das erste Telefon EG1 in äquidistanten Zeitabschnitten oder zumindest mit gleichen Pausenlängen zwischen den Kenntönen generiert werden.

Gemäß Figur 2A erreicht zum Zeitpunkt TS ein erster Kennton K1 den Gateway GW1. Dieser Kennton K1 wird durch den Gateway GW1 als Beginn der aus mindestens zwei Kenntönen bestehenden, zu verarbeitende Kenntonfolge erkannt. Zum Zeitpunkt TP0 ist das Ende des Kenntons K1 erreicht und es folgt ein dem Kennton K1 anschließender kenntonfreier Zeitabschnitt, der als Pausendauer T1 bezeichnet wird. Beendet wird dieser kenntonfreie Zeitabschnitt durch ein Einsetzen des zweiten Kenntons K2 zum Zeitpunkt TP1. Die sich zwischen den Zeitpunkten TP0 und TP1 ergebene Pausendauer T1 wird durch den ersten Gateway GW1 auf eine beliebige Weise erfasst. Zur Erfassung und Bestimmung der Pausendauer T1 ist beispielsweise ein Einsatz von Zeitgebern oder ein Verwenden von durch Signaländerungen am Eingang ausgelösten Interrupts denkbar.

Der zweite Kennton K2 liegt nun am Eingang des ersten Gateways GW1 protokollkonform für eine gewisse Zeitdauer an, wobei zum Zeitpunkt TP2 der Kennton K2 beendet ist. Ausgelöst durch dieses Ereignis wird nun eine Prüfung aktiviert, ob die dem Zeitpunkt TP2 folgende Pausendauer TV1 als Dauer eines kenntonfreien Zeitabschnitts zwischen dem Ende des Kenntons K2 und einem daraufhin folgenden Kennton K3 mit der erfassten Pausendauer T1 übereinstimmt. Eine derartige Prüfung kann beispielsweise erneut durch Einsatz von Zeitgebern und/oder Interrupts durchgeführt werden. Im vorliegenden Ausführungsbeispiel gemäß Figur 2A sei angenommen, dass die zu vergleichende Pausendauer TV1 mit der Pausendauer T1 übereinstimmt. Ein Übersteigen der ersten Pausendauer T1 durch die dem Kennton K2 anschließende Pausendauer TV1 als kenntonfreier Zeitabschnitt kann somit nicht erkannt werden.

Die Überprüfung muss hierbei gegenüber leichten Laufzeitschwankungen resistent sein, da beispielsweise ein Ablaufen eines Zeitgebers üblicherweise in realen Systemen nie exakt gleichzeitig mit einem zweiten Ereignis auftritt. Und selbst wenn dies so wäre, dann haben übliche Realzeitsysteme Probleme dies zu erkennen, da Kollisionen von gleichzeitig eintretenden Ereignissen Fehlverhalten nach sich ziehen könnten oder dass ein Ereignis in der Bearbeitung einem weiteren Ereignis vorgezogen wird, so dass das zweite Ereignis evtl. gar nicht oder verspätet registriert wird. Derartige Fälle sollten je nach Implementierung abgefangen werden, so dass die Überprüfung derart erfolgt, dass bereits eine im Wesentlichen auftretende Übereinstimmung der Zeitdauern bzw. Zeitpunkte als positives Prüfergebnis gewertet wird. Möglicherweise kann mit Schrankenwerten gearbeitet werden, dass ein Überschreiten einer unteren Zeit-Schranke und ein nicht Überschreiten einer oberen Zeitschranke als eine Übereinstimmung im Sinne der Erfindung interpretiert werden kann.

Der Ablauf setzt sich nun gemäß Figur 2A derart fort, dass der dritte Kennton K3 zum Zeitpunkt TP3 anliegt. Die zweite Pausendauer TV1 kann somit ermittelt werden. Die zweite Pausendauer TV1 sei im vorliegenden Ausführungsbeispiel mit der ersten Pausendauer T1 als im Wesentlichen übereinstimmend angenommen. Dies wird durch den ersten Gateway GW1 erkannt. Somit werden auch die bisher eingegangenen Kenntöne K1, K2 und K3 als der Kenntonfolge zur Bildung einer Zielrufnummer zugehörig angesehen.

Der Kennton K3 liegt nun seinerseits bis zum Zeitpunkt T4 an, wobei ab diesem Zeitpunkt nun erneut ein kenntonloser Zeitabschnitt folgt. Erneut erfolgt eine Überprüfung des kenntonlosen Zeitabschnitts mit der ersten Pausendauer T1. Im vorliegenden Ausführungsbeispiel sei angenommen, dass bereits nach den drei Kenntönen K1, K2 und K3 die Kenntonfolge abgeschlossen ist. Es ergibt sich somit, dass durch den ersten Gateway GW1 nach Ablauf der Zeitspanne TV2 zu einem Zeitpunkt TE durch Überprüfen der Zeitspanne TV2 mit der ersten Pausendauer T1 erkannt wird, dass kein weiterer Kennton am ersten Gateway GW1 anliegt. Erneut kann eine geringe zeitliche Schwankungsbandbreite abgewartet werden, doch kann im Wesentlichen unmittelbar nach Erkennen des Übersteigens der ersten Pausendauer T1 durch den an den Kennton K3 anschließenden kenntonfreien Zeitabschnitt TV2 eine Verarbeitung der nun vollständig vorliegenden Kenntonfolge erfolgen.

Im vorliegenden Ausführungsbeispiel ist zu beachten, dass zur vereinfachten Darstellung lediglich drei Kenntöne zur Kenntonfolge gehören, wobei diese geringe Anzahl lediglich aus Übersichtlichkeitsgründen gewählt wurde und drei Kenntöne für eine Zielrufnummer in öffentlichen Netzwerken sicherlich nur einen Sonderfall darstellen.

Durch Erkennen, dass die Kenntonfolge zum Zeitpunkt TE vollständig eingegangen ist, kann nun der Gateway GW1 ohne weitere Verzögerungen und somit unmittelbar nach dem Übersteigen der ersten Pausendauer T1 durch den kenntonfreien Zeitabschnitt eine Verarbeitung der Kenntonfolge durchführen. Das wäre im vorliegenden Ausführungsbeispiel ein Kodieren der Kenntöne K1, K2, K3 in eine ASCII-Repräsentierung (ASCII: American Standard Code for Information Interchange) oder einer dazu analogen Darstellung einer Zielrufnummer und das Generieren eines Signalisierungsdatenpakets für einen Rufaufbau, bei dem diese ASCII-Repräsentierung der Zielrufnummer als Wert eines Zieladressfelds eingetragen wird. Daraufhin kann das Signalisierungsdatenpaket an das paketorientierte Netzwerk PN abgegeben werden, so dass ein Verbindungsaufbau - beispielsweise zum IP-Telefon EG2 oder zum zweiten analogen Telefon EG3 erfolgen kann.

Ein Vorteil dieses Verfahrens ist, dass der erste Gateway GW1 durch Analyse des Zeitverhaltens der eingehenden Kenntöne ein Ende der Kenntonfolge ohne große Zeitverzögerung erkennen kann. Weiterhin ist vorteilhaft, dass eine gesonderte Signalisierung von Beginn der Kenntonfolge und Ende der Kenntonfolge nicht benötigt wird.

In Figur 2B ist eine Variation des aus Figur 2A bekannten zeitlichen Ablaufs veranschaulicht. Während in Figur 2A das Anliegen der Kenntöne K1, K2 und K3 jeweils über die gleiche Zeitdauer angetragen ist, wird in Figur 2B davon ausgegangen, dass die Kenntöne K1, K2 und K3 über unterschiedliche Zeitdauer anliegen. Dies kann durch ein Protokoll vorgegeben sein. Das Verfahren läuft trotzdem weiterhin analog zu Figur 2A ab, d.h. zum Zeitpunkt TP0 ist der erste Kennton K1 beendet und zum Zeitpunkt TP1 folgt der zweite Kennton K2. Die dazwischen liegende Zeitspanne wird als Pausendauer T1 erfasst. Nun werden jeweils nach Beendigung eines der folgenden Kenntöne K2 bzw. K3 Überprüfungen der Pausendauern gemäß der Erfindung durchgeführt. Erneut wird in Figur 2B zum bzw. ab dem Zeitpunkt TE ein Übersteigen bzw. Überschreiten der erfassten Pausendauer T1 für die dem Kennton K3 folgenden kenntonlosen Zeitabschnitt erkannt, so dass ab dem Zeitpunkt TE eine Weiterverarbeitung der Kenntonfolge erfolgen kann.

Anhand von Figur 3 wird im Folgenden erläutert, dass die Erfindung auch mit manuellen, ungleichmäßigen Eingaben gemäß der vorstehend genannten Variante 1 in Einklang zu bringen ist, so dass manuelle Eingaben weiterhin möglich sind - auch wenn sich für manuelle Eingaben keine Vorteile erreichen lassen - und sich im Zeitverhalten für manuelle Eingaben kein Nachteil ergibt. Zur Verdeutlichung weisen die in den Abbildungen von Figur 3 angegebenen Zeitabläufe ungleichmäßige Pausenlängen zwischen den Kenntönen K1, K2, ... auf. Die Darstellungen der Abbildungen und die verwendeten Bezugszeichen entsprechen dabei weitgehend der aus Figur 2A bekannten Darstellung.

In Figur 3A wird das Eintreffen eines ersten Kenntons K1 zu einem Zeitpunkt TS als Beginn einer Kenntonfolge erkannt. Nach Beendigung des Kenntons K1 zum Zeitpunkt TP0 wird erfindungsgemäß die kenntonlose Zeitspanne bestimmt, bis der nächste Kennton - hier Kennton K2 - eintrifft. Der Kennton K2 liegt zum Zeitpunkt TP1 am Eingang des ersten Gateway GW1, so dass der erste Gateway GW1 die kenntonlose Zeitspanne als Pausendauer T1 bestimmen kann. Ebenfalls erfindungsgemäß wird nach Beendigung des zweiten Kenntons K2 zum Zeitpunkt TP2 die nun Folgende kenntonlose Zeitspanne bestimmt. Die Dauer dieser zum Zeitpunkt TP2 beginnenden kenntonlosen Zeitspanne wird bis zum Einsetzen des dritten Kenntons K3 - zum Zeitpunkt TP3 - bestimmt und wird als Pausendauer TV1 bezeichnet. Nun sei angenommen, dass die Pausendauer TV1 größer sei als die erste Pausendauer T1. Zur Verdeutlichung ist die Zeitdauer T1 in Figur 2 rechts vom Zeitpunkt TP2 erneut als Referenzzeitdauer TM angetragen.

Erfindungsgemäß erfolgt nun eine Überprüfung der zuletzt aufgetretenen Pausendauer TV1 im Vergleich zur ersten Pausendauer T1 bzw. der Referenzzeitdauer TM. In diesem Fall ist keine Übereinstimmung vorhanden. Die Schlussfolgerung ist in diesem Fall aber nicht, dass die Kenntonfolge als abgeschlossen angesehen wird, sondern - dadurch dass bereits die zweite untersuchte kenntonlose Zeitspanne sich von der ersten Pausendauer T1 unterscheidet - dass das Ende der Kenntonfolge in diesem Fall nicht durch Überschreiten der ersten Pausendauer T1 durch eine Vergleichszeitdauer erkannt werden kann. In diesem Fall müssen somit bekannte, relativ lange Zeitdauern abwartende Verfahren eingesetzt werden, um das tatsächliche Ende der Kenntonfolge zu erkennen.

Figur 3B verdeutlicht ein alternatives Zeitverhalten, bei dem analog wie bei Figur 3A, erkannt wird, dass es sich bei der anliegenden Kenntonfolge um manuell eingegebene Wählziffern handelt, so dass eine Überprüfung des erstmaligen Überschreitens der ersten Dauer durch einen dem jeweiligen folgenden Kennton jeweils anschließenden kenntonfreien Zeitabschnitt nicht als Ende der Kenntonfolge gewertet werden kann.

Der Ablauf der Kenntöne K1, K2 und K3 entspricht weitgehend der Abfolge der ebenso bezeichneten Kenntöne in Figur 3A. Jedoch sei in Figur 3B der Zeitpunkt TP3, zu dem der dritte Kennton K3 eintrifft bereits vor Ablauf einer T1 entsprechenden Pausendauer erreicht. Dies ist in Figur 3B durch Antragen einer dem zweiten Kennton K2 folgenden Referenzzeitdauer TM, die mit der ersten Pausendauer T1 übereinstimmt verdeutlicht, wobei in Figur 3B zu erkennen ist, dass die Referenzzeitdauer TM erst nach dem Zeitpunkt TP3 erreicht wird, und somit der Kennton K3 bereits anliegt. Auch in einem derart gestalteten Zeitverhalten, wird eine erfindungsgemäße Überprüfung des erstmaligen Überschreitens der ersten Dauer durch einen dem jeweiligen folgenden Kennton jeweils anschließenden kenntonfreien Zeitabschnitt deaktiviert oder zumindest wirkungslos geschaltet. Ein Ende einer Kenntonfolge wird wiederum durch Ablaufen eines relativ langen Zeitgebers nach Beendigung eines Kenntons erkannt, wobei bei einem derartigen Vorgehen stets die Gefahr besteht, nur vermeintlich das Ende der Kenntonfolge zu erkennen, obwohl das tatsächliche Ende der Kenntonfolge erst später auftritt.

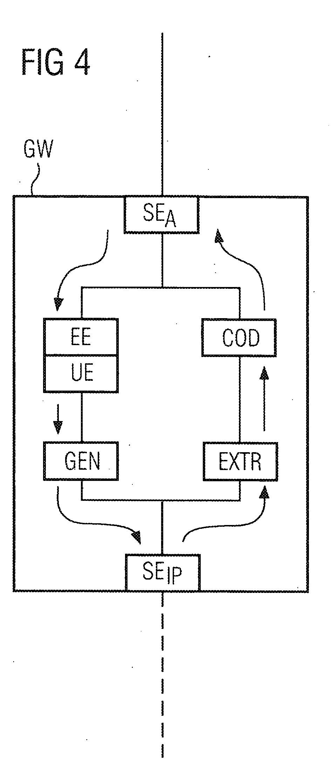

Mittels Figur 4 wird im Folgenden eine mögliche Anordnung der Erfindung innerhalb einer Koppeleinrichtung oder Umsetzeinrichtung GW als erfindungsgemäße Kommunikationseinrichtung - wie beispielsweise die Gateways GW1 oder GW2 - erläutert.

Als Schnittstelle zum analogen Netzwerk sei eine Sende-/Empfangseinrichtung SE_{A} vorgesehen. Analog dazu ist eine Sende-/Empfangseinrichtung SE_{IP} für ein Bereitstellen von zu sendenden oder ein Auswerten von empfangenen Datenpakten als Schnittstelle zum paketorientierten Netzwerk angeordnet.

Für eingehende analoge Daten- oder Sprachsignale - wie die eingehenden Kenntöne der Kenntonfolge - werden die durch die Sende-/Empfangseinrichtung SE_{A} erfassten Informationen einer Erfassungseinheit EE zum Erfassen einer zwischen einem ersten Kennton und einem nächstfolgenden zweiten Kennton, einer aus mindestens zwei Kenntönen bestehenden, der Umsetzeinrichtung GW sequentiell zugeführten, zu verarbeitenden Kenntonfolge, auftretenden ersten Dauer eines kenntonfreien Zeitabschnitts zugeführt. Aufbauend darauf ist eine Überprüfungseinheit UE zum Überprüfen eines Übersteigens der ersten Dauer durch einen für einen folgenden Kennton der Kenntonfolge jeweils anschließenden kenntonfreien Zeitabschnitt vorgesehen. Die daraus resultierenden Informationen werden bei einer Generierungseinheit GEN zum Erzeugen von Datenpaketen für das paketorientierte Netzwerk berücksichtigt, wobei die erzeugten Datenpakete der Sende-/Empfangseinrichtung SE_{IP} zugeführt werden.

In Gegenrichtung - wobei die Abarbeitungsrichtung durch zwei Pfeile angedeutet ist - wird ein eingehendes Datenpakete von der Sende-/Empfangseinrichtung SE_{IP} an eines Extrahierungseinheit EXTR zugeführt, die eine Auswertung der Datenpakete vornimmt und Informationen extrahiert. Diese Information werden einer Kodierungseinheit COD zugeleitet, durch die unter Ansteuerung der Sende-/Empfangseinrichtung SE_{A} die Kommunikation bzw. Signalisierung über die analoge Leitung erfolgt.

## Patentansprüche

1. Verfahren zum Verarbeiten eines Wählvorgangs in einer Kommunikationseinrichtung (GW1), bei dem
- Kenntöne (K1, K2, K3) einer der Kommunikationseinrichtung (GW1) sequentiell zugeführten und aus mindestens zwei Kenntönen bestehenden, zu verarbeitenden Kenntonfolge erkannt werden,
- eine zwischen einem ersten Kennton (K1) der Kenntonfolge und einem nächstfolgenden zweiten Kennton (K2) der Kenntonfolge auftretende erste Dauer (T1) eines kenntonfreien Zeitabschnitts erfasst wird, und
für einen folgenden Kennton (K3) der Kenntonfolge ein Übersteigen der ersten Dauer (T1, TM) durch einen sich dem jeweiligen folgenden Kennton (K3) jeweils anschließenden kenntonfreien zeitabschnitt (TV1) geprüft wird.

2. Verfahren nach Anspruch 1,
**dadurch gekennzeichnet,**
**dass** für jeden auf den zweiten Kennton folgenden Kennton der Kenntonfolge das Überprüfen auf Übersteigen der ersten Dauer durch den dem jeweiligen folgenden Kennton jeweils anschließenden kenntonfreien Zeitabschnitt erfolgt.

3. Verfahren nach einem der vorhergehenden Ansprüche,
**dadurch gekennzeichnet,**
**dass** unmittelbar nach dem Übersteigen der ersten Dauer durch den kenntonfreien Zeitabschnitt eine Verarbeitung der Kenntonfolge erfolgt.

4. Verfahren nach einem der vorhergehenden Ansprüche,
**dadurch gekennzeichnet,**
**dass** ein die erfasste erste Dauer repräsentierender Zeitdauer-Wert als Laufzeit eines Zeitgebers verwendet wird, der Zeitgeber mit gesetzter Laufzeit gemäß dem Zeitdauer-Wert jeweils unmittelbar nach Ende eines der folgenden Kenntöne gestartet wird, und das Übersteigen der ersten Dauer durch den kenntonfreien Zeitabschnitt **dadurch** erkannt wird, dass ein Ablaufen des Zeitgebers nicht mit einem Eintreffen eines dem zweiten Kennton nächstfolgenden weiteren Kenntons im Wesentlichen übereinstimmt.

5. Verfahren nach einem der vorhergehenden Ansprüche,
**dadurch gekennzeichnet,**
**dass** eine zweite Dauer eines kenntonfreien Zeitabschnitts zwischen dem zweiten Kennton und einem nächstfolgenden dritten Kennton der Kenntonfolge ermittelt wird, und ein die erste Dauer repräsentierender erster Zeitdauer-Wert mit einem die zweite Dauer repräsentierenden zweiten Zeitdauer-Wert verglichen wird,
wobei bei Übereinstimmung der ersten und der zweiten Zeitdauer-Werte der erste Kennton als Beginn der zu verarbeitenden Kenntonfolge erkannt wird.

6. Verfahren nach einem der vorhergehenden Ansprüche,
**dadurch gekennzeichnet,**
**dass** für jeden der folgenden Kenntöne der Kenntonfolge
- zu dessen jeweils unmittelbar vorhergehenden Kennton ein eine jeweilig weitere Dauer eines tonfreien Zeitabschnitts repräsentierender weiterer Zeitdauer-Wert erfasst wird,
- ein die erste Dauer repräsentierender erster Zeitdauer-Wert mit dem jeweiligen weiteren Zeitdauer-Wert verglichen wird, wobei aufgrund einer erstmaligen Ungleichheit der der weiteren Dauer unmittelbar vorausgehende Kennton als Ende der Kenntonfolge erkannt wird.

7. Verfahren nach einem der vorhergehenden Ansprüche,
**dadurch gekennzeichnet,**
**dass** nach Erkennen des Endes der zu verarbeitenden Kenntonfolge, zu verarbeitende nachfolgende Kenntöne als der Kenntonfolge zugehörig bestimmt werden, sofern ein jeweiliges Übersteigen einer vorgegebenen Zeitdauerobergrenze durch einen Zeitdauer-Wert eines dem jeweiligen nachfolgenden Kennton jeweils anschließenden kenntonfreien Zeitabschnitts unterbleibt.

8. Verfahren nach einem der vorhergehenden Ansprüche,
**dadurch gekennzeichnet,**
**dass** die Kenntonfolge bei der Kommunikationseinrichtung als DTMF-kodierte Töne eingehen.

9. Verfahren nach einem der vorhergehenden Ansprüche,
**dadurch gekennzeichnet,**
**dass** im Rahmen der Verarbeitung der Kenntonfolge eine kodierte Übermittlung der Kenntonfolge bei einer Verbindungsinitiierung durch die Kommunikationseinrichtung in einem Feld eines Datenpaketes eines paketorientierten Netzwerkes erfolgt.

10. Verfahren nach einem der vorhergehenden Ansprüche,
**dadurch gekennzeichnet,**
**dass** jeweilige Kenntonfolgen für jede von mehreren Kenntonquellen separat verarbeitet werden,
**dass** das Erfassen der ersten Dauer der jeweiligen Kenntonfolge für jede der Kenntonquellen separat erfolgt, und
**dass** das Überprüfen des Übersteigens der separat erfassten ersten Dauer durch den für einen folgenden Kennton der jeweiligen Kenntonfolge jeweils anschließenden kenntonfreien Zeitabschnitt separat erfolgt.

11. Kommunikationseinrichtung (GW, GW1, GW2) zum Verarbeiten eines Wählvorgangs,
aufweisend,
- eine Erfassungseinheit (EE) zum Erfassen einer zwischen einem ersten Kennton (K1) und einem nächstfolgenden zweiten Kennton (K1) einer aus mindestens zwei Kenntönen bestehenden, der Kommunikationseinrichtung sequentiell zugeführten, zu verarbeitenden Kenntonfolge auftretenden ersten Dauer (T1) eines kenntonfreien Zeitabschnitts, und
- eine Überprüfungseinheit (UE) zum Überprüfen eines Übersteigens der ersten Dauer (T1, TM) durch einen für einen folgenden Kennton (K3) der Kenntonfolge jeweils anschließenden kenntonfreien Zeitabschnitt (TV1).

12. Kommunikationseinrichtung nach Anspruch 11,
**dadurch gekennzeichnet,**
**dass** die Kommunikationseinrichtung als Gateway-Einrichtung zum Ankoppeln mindestens einer analogen, die Kenntonfolge übermittelnden Kenntonquelle an ein paketorientiertes Netzwerk ausgestaltet ist.

## Claims

1. Method for handling a dialling process in a communication device (GW1), in which
- characteristic tones (K1, K2, K3) of a characteristic tone sequence which is sequentially supplied to the communication device (GW1), consists of at least two characteristic tones and is to be processed are recognized,
- a first duration (T1) of a period of time which is free of characteristic tones is detected, which duration occurs between a first characteristic tone (K1) of the characteristic tone sequence and a next, second characteristic tone (K2) of the characteristic tone sequence, and,
for a subsequent characteristic tone (K3) of the characteristic tone sequence, a check is carried out in order to determine whether the first duration (T1, TM) is exceeded by a period of time (TV1) which is free of characteristic tones and respectively follows the respective subsequent characteristic tone (K3).

2. Method according to Claim 1,
**characterized in that**,
for each characteristic tone of the characteristic tone sequence which follows the second characteristic tone, a check is carried out in order to determine whether the first duration is exceeded by the period of time which is free of
characteristic tones and respectively follows the respective subsequent characteristic tone.

3. Method according to one of the preceding claims,
**characterized in that**
the characteristic tone sequence is processed immediately after the first duration has been exceeded by the period of time which is free of characteristic tones.

4. Method according to one of the preceding claims,
**characterized in that**
a duration value representing the detected first duration is used as the run time of a timer, the timer with the run time set according to the duration value is respectively started immediately after the end of one of the subsequent characteristic tones, and
the exceeding of the first duration by the period of time which is free of characteristic tones is detected by virtue of the fact that running of the timer essentially does not correspond to arrival of a further characteristic tone following the second characteristic tone.

5. Method according to one of the preceding claims,
**characterized in that**
a second duration of a period of time which is free of characteristic tones is determined between the second characteristic tone and a next, third characteristic tone of the characteristic tone sequence, and
a first duration value representing the first duration is compared with a second duration value representing the second duration,
the first characteristic tone being recognized as the beginning of the characteristic tone sequence to be processed if the first and second duration values correspond.

6. Method according to one of the preceding claims,
**characterized in that**,
for each of the subsequent characteristic tones of the characteristic tone sequence,
- a further duration value representing a respectively further duration of a period of time which is free of tones is detected for its respective immediately preceding characteristic tone,
- a first duration value representing the first duration is compared with the respective further duration value, the characteristic tone which immediately precedes the further duration being recognized as the end of the characteristic tone sequence on account of disparity for the first time.

7. Method according to one of the preceding claims,
**characterized in that**,
after the end of the characteristic tone sequence to be processed has been recognized, subsequent characteristic tones to be processed are determined as belonging to the characteristic tone sequence if a predefined duration upper limit is respectively not exceeded by a duration value of a period of time which is free of characteristic tones and respectively follows the respective subsequent characteristic tone.

8. Method according to one of the preceding claims,
**characterized in that**
the characteristic tone sequences are received in the communication device in the form of DTMF-coded tones.

9. Method according to one of the preceding claims,
**characterized in that**,
within the scope of the processing of the characteristic tone sequence, the characteristic tone sequence is transmitted in coded form in a field of a data packet in a packet-oriented network when a connection is initiated by the communication device.

10. Method according to one of the preceding claims,
**characterized in that**
respective characteristic tone sequences are processed separately for each of a plurality of characteristic tone sources,
**in that** the first duration of the respective characteristic tone sequence is detected separately for each of the characteristic tone sources, and
**in that** the check to determine whether the separately detected first duration is exceeded by the period of time which is free of characteristic tones and respectively follows a subsequent characteristic tone of the respective characteristic tone sequence is carried out separately.

11. Communication device (GW, GW1, GW9) for handling a dialling process,
having
- a detection unit (EE) for detecting a first duration (T1) of a period of time which is free of characteristic tones, which duration occurs between a first characteristic tone (K1) and a next, second characteristic tone (K2) of a characteristic tone sequence which consists of at least two characteristic tones, is sequentially supplied to the communication device and is to be processed, and
- a checking unit (UE) for checking whether the first duration (T1, TM) is exceeded by a period of time (TV1) which is free of characteristic tones and respectively follows a subsequent characteristic tone (K3) of the characteristic tone sequence.

12. Communication device according to Claim 11,
**characterized in that**
the communication device is in the form of a gateway device for coupling at least one analogue characteristic tone source, which transmits the characteristic tone sequence, to a packer-oriented network.

## Revendications

1. Procédé de traitement d'une numérotation dans un dispositif de communication (GW1), selon lequel
- on détecte des tonalités d'identification (K1, K2, K3) d'une séquence de tonalités d'identification à traiter, constituée d'au moins deux tonalités d'identification et envoyée de manière séquentielle au dispositif de communication (GW1),
- on détecte une première durée (T1) d'un intervalle de temps sans tonalité d'identification qui apparaît entre une première tonalité d'identification (K1) de la séquence de tonalités d'identification et une deuxième tonalité d'identification immédiatement suivante (K2) de la séquence de tonalités d'identification, et
- on teste, pour une tonalité d'identification suivante (K3) de la séquence de tonalités d'identification, un dépassement de la première durée (T1, TM) par un intervalle de temps (TV1) sans tonalité d'identification qui fait suite respectivement à la tonalité d'identification suivante respective (K3).

2. Procédé selon la revendication 1, **caractérisé en ce que**, pour chaque tonalité d'identification qui suit la deuxième tonalité d'identification dans la séquence de tonalités d'identification, on effectue le test du dépassement de la première durée par l'intervalle de temps sans tonalité d'identification qui fait suite respectivement à la tonalité d'identification suivante respective.

3. Procédé selon l'une des revendications précédentes, **caractérisé en ce que**, immédiatement après le dépassement de la première durée par l'intervalle de temps sans tonalité d'identification, on effectue un traitement de la séquence de tonalités d'identification.

4. Procédé selon l'une des revendications précédentes, **caractérisé en ce que**
- l'on utilise une valeur de durée représentant la première durée détectée comme temps de retard d'un temporisateur, le temporisateur avec temps de retard donné selon la valeur de durée étant démarré à chaque fois immédiatement après la fin de l'une des tonalités d'identification suivantes, et
- on détecte le dépassement de la première durée par l'intervalle de temps sans tonalité d'identification grâce au fait qu'une expiration du temporisateur ne coïncide pas globalement avec l'arrivée d'une autre tonalité d'identification qui suit immédiatement la deuxième tonalité d'identification.

5. Procédé selon l'une des revendications précédentes, **caractérisé en ce que**
- on détermine une deuxième durée d'un intervalle de temps sans tonalité d'identification entre la deuxième tonalité d'identification et une troisième tonalité d'identification immédiatement suivante dans la séquence de tonalités d'identification, et
- on compare une première valeur de durée représentant la première durée à une deuxième valeur de durée représentant la deuxième durée,
sachant que, en cas de coïncidence de la première , valeur de durée et de la deuxième valeur de durée, la première tonalité d'identification est reconnue comme début de la séquence de tonalités d'identification à traiter.

6. Procédé selon l'une des revendications précédentes, **caractérisé en ce que**, pour chacune des tonalités d'identification suivantes de la séquence de tonalités d'identification,
- par rapport à sa tonalité d'identification respectivement immédiatement précédente, on détecte une autre valeur de durée représentant une autre durée respective d'un intervalle de temps sans tonalité d'identification,
- on compare une première valeur de durée représentant la première durée à l'autre valeur de durée respective, sachant que, sur la base d'une première inégalité, la tonalité d'identification qui précède immédiatement l'autre durée est reconnue comme fin de la séquence de tonalités d'identification.

7. Procédé selon l'une des revendications précédentes, **caractérisé en ce que**, après la reconnaissance de la fin de la séquence de tonalités d'identification à traiter, on détermine des tonalités d'identification suivantes à traiter comme appartenant à la séquence de tonalités d'identification dans la mesure où un dépassement respectif d'une limite supérieure de durée prédéfinie par une valeur de durée d'un intervalle de temps sans tonalité d'identification qui fait suite respectivement à la tonalité d'identification suivante respective n'a pas eu lieu.

8. Procédé selon l'une des revendications précédentes, **caractérisé en ce que** la séquence de tonalités d'identification entre comme tonalités codées DTMF dans le dispositif de communication.

9. Procédé selon l'une des revendications précédentes, **caractérisé en ce que**, dans le cadre du traitement de la séquence de tonalités d'identification, on effectue une transmission codée de la séquence de tonalités d'identification lors d'une initialisation de liaison au moyen du dispositif de communication dans un champ d'un paquet de données d'un réseau en mode paquets.

10. Procédé selon l'une des revendications précédentes, **caractérisé**
- **en ce que** l'on traite des séquences de tonalités d'identification respectives séparément pour chacune des sources de tonalités d'identification,
- **en ce que** l'on effectue la détection de la première durée de la séquence de tonalités d'identification respective séparément pour chacune des sources de tonalités d'identification, et
- **en ce que** l'on effectue séparément le test du dépassement de la première durée détectée séparément par l'intervalle de temps sans tonalité d'identification qui fait suite respectivement à une tonalité d'identification suivante de la séquence de tonalités d'identification respective.

11. Dispositif de communication (GW, GW1, GW2) pour le traitement d'une numérotation,
comportant :
- une unité de détection (EE) pour la détection d'une première durée (T1) d'un intervalle de temps sans tonalité d'identification qui apparaît entre une première tonalité d'identification (K1) et une deuxième tonalité d'identification immédiatement suivante (K2) dans une séquence de tonalités d'identification à traiter constituée d'au moins deux tonalités d'identification et envoyée séquentiellement au dispositif de communication, et
- un dispositif de test (UE) pour tester un dépassement de la première durée (T1, TM) par un intervalle de temps (TV1) sans tonalité d'identification qui fait suite respectivement à une tonalité d'identification suivante (K3) dans la séquence de tonalités d'identification.

12. Dispositif de communication selon la revendication 11, **caractérisé en ce que** le dispositif de communication est conçu comme un dispositif dit passerelle pour la connexion d'au moins une source de tonalités d'identification analogique transmettant la séquence de tonalités d'identification à un réseau en mode paquets.
